# EUROPÄISCHE PATENTSCHRIFT

(11) **EP 3 334 598 B1**
(45) Veröffentlichungstag und Bekanntmachung des Hinweises auf die Patenterteilung: **16.12.2020**
(21) Anmeldenummer: 16753895.8
(22) Anmeldetag: 15.08.2016
(51) Int. Cl.: B32B 17/10, F21V 33/00, G02B 6/00, B32B 3/02, B32B 7/12, B60Q 1/26, B60Q 1/50, B60Q 3/208, B60Q 3/43, B60Q 3/64, B60Q 9/00, F21V 8/00

(54) **VERBUNDSCHEIBE MIT BELEUCHTUNG**
COMPOUND GLAZING WITH ILLUMINATION
VITRE COMPOSITE DOTEE D'ECLAIRAGE

(30) Priorität: 14.08.2015 EP 15181016
(43) Veröffentlichungstag der Anmeldung: 20.06.2018
(73) Patentinhaber: SAINT-GOBAIN GLASS FRANCE, 92400 Courbevoie (FR)
(72) Erfinder: KLEIN, Marcel, 52499 Baesweiler (DE); DÖRNER, Dirk, 79312 Emmendingen (DE); BAYER, Herbert, 52080 Aachen (DE)
(74) Vertreter: Lendvai, Tomas
(86) Internationale Anmeldenummer: PCT/EP2016/069323
(87) Internationale Veröffentlichungsnummer: WO 2017/029254

(56) Entgegenhaltungen:
- WO-A1-2005/054915
- US-A1- 2014 240 997

## Beschreibung

Die Erfindung betrifft eine Verbundscheibe, insbesondere eine Seitenscheibe eines Fahrzeugs, mit beleuchteter Begrenzung sowie ein Verfahren zu deren Herstellung und deren Verwendung.

Verbundscheiben bestehen aus mindestens einer Außenscheibe, einer Innenscheibe und einer klebefähigen Zwischenschicht, die die Außenscheibe mit der Innenscheibe flächig verbindet. Typische Zwischenschichten sind dabei Polyvinylbutyralfolien, die neben ihren Klebeeigenschaften eine hohe Zähigkeit und eine hohe akustische Dämpfung aufweisen. Die Zwischenschicht verhindert den Zerfall der Verbundglasscheibe bei einer Beschädigung. Die Verbundscheibe bekommt lediglich Sprünge, bleibt aber formstabil.

Verbundscheiben haben gegenüber Einscheibensicherheitsgläsern deutliche Vorteile: So kann durch eine Verbundscheibe eine hohe akustische Isolation erzielt werden, was beispielsweise zur Abtrennung von Fahrzeuginnenräumen von ihrer äußeren Umgebung besonders vorteilhaft ist. Deshalb werden neben Windschutzscheiben auch zunehmend Seitenscheiben von Kraftfahrzeugen aus Verbundglas gefertigt. Gleichzeitig weist eine Verbundscheibe eine höhere Durchbruchshemmung als ein Einscheibensicherheitsglas auf und ist somit stabiler gegenüber einem Eindringen von Fremdkörpern oder Einbruchsversuchen.

WO 2005/054915 A1 offenbart eine Lichtleitanordnung für Fahrzeugdächer, in der mittels eines Lichtkopplungsmittels Licht in die Lichtleitanordnung gekoppelt wird und das in die Zwischenschicht eingekoppelte Licht im Wesentlichen durch die Zwischenschicht geführt wird.

In der US 2014/0240997 A1 ist eine beleuchtete Signalverglasungseinheit mit einem System zum Beleuchten über die Kantenfläche der Verglasungseinheit und einem Mittel zum Extrahieren des Lichts offenbart.

Der vorliegenden Erfindung liegt die Aufgabe zugrunde, eine verbesserte Verbundscheibe mit zumindest abschnittsweise beleuchtbarer Begrenzung bereitzustellen. Die Beleuchtung soll einfach und kostengünstig in die Verbundscheibe integrierbar sein.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe umfassend mindestens:
- eine Außenscheibe und eine Innenscheibe, welche über eine Zwischenschicht miteinander verbunden sind, wobei die Zwischenschicht zumindest abschnittsweise einen Rückschnitt zu einer Scheibenkante der Außenscheibe und/oder der Innenscheibe aufweist und
- mindestens eine lichtstreuende Glasfaser, wobei die lichtstreuende Glasfaser zumindest teilweise im Bereich des Rückschnitts zwischen der Außenscheibe und der Innenscheibe angeordnet ist.

In einer vorteilhaften Ausgestaltung ist die erfindungsgemäße Verbundscheibe eine laminierte Seitenscheibe, die für ein, bevorzugt zu öffnendes, Seitenfenster eines Fahrzeugs vorgesehen ist. Unter einem zu öffnenden Seitenfenster wird ein Seitenfenster verstanden, welches sich durch im Wesentlichen vertikale Verschiebung der Seitenscheibe in die Karosserietür hinein öffnen und wieder schließen lässt.

Die Begriffe Außenscheibe und Innenscheibe dienen lediglich zur Unterscheidung einer ersten Scheibe und einer zweiten Scheibe. Im Falle einer Verwendung der Verbundscheibe als Fahrzeugscheibe oder als Gebäudescheibe ist die Außenscheibe bevorzugt aber nicht notwendigerweise dem Außenraum der Verbundscheibe zugewandt und die Innenscheibe dem Innenraum.

Die erfindungsgemäß eingesetzte Glasfaser ist eine lichtstreuende Glasfaser, die durch Streuung Licht über ihre Seitenwand über ihre Erstreckungslänge aussendet. Derartige Glasfasern bestehen üblicherweise aus mindestens einem Glasfaserkern, der durch eine oder mehrere mantelförmig um den Glasfaserkern angeordneten Schichten umgeben ist. Die Mantelschichten weisen dabei üblicherweise eine Vielzahl von Streuzentren auf, beispielsweise Nanoporen oder Nanopartikel. Geeignete lichtstreuende Glasfasern sind dem Fachmann wohlbekannt. Nur beispielsweise sei hier auf die in der US 20111/0122646 A1 oder US 2015/0131955 A1 genannten Glasfasern verwiesen. Die Dicke der Glasfaser beträgt typischerweise von 5 µm bis 300 µm, bevorzugt von 100 µm bis 250 µm. Es versteht sich, dass die Glasfaser durch eine geeignete Herstellung oder Bearbeitung auch nur über abschnittsweise lichtstreuende Bereiche verfügen kann. Erfindungsgemäß weist die Glasfaser zumindest einen Glasfaserabschnitt bzw. Glasfaserbereich auf, der so ausgebildet ist, dass durch Streuung Licht über eine Seitenwand der Glasfaser über eine Erstreckungslänge des Glasfaserabschnitts bzw. Glasfaserbereichs ausgesendet werden kann bzw. ausgesendet wird. Die Glasfaser kann insbesondere so ausgebildet sein, dass über ihre volle Erstreckungslänge Licht über die Seitenwand ausgesendet werden kann bzw. ausgesendet wird. Unter dem Begriff lichtstreuende Glasfaser sei im Rahmen der vorliegenden Erfindung auch ein Bündel oder Geflecht mehrerer einzelner Glasfasern zu verstehen, die als Einheit in Bereich des Rückschnitts angeordnet sind.

Die erfindungsgemäße Zwischenschicht weist zumindest abschnittsweise einen Rückschnitt zu einer Scheibenkante auf. Unter Rückschnitt sei hier jeder Rückversatz beziehungsweise jede Verkürzung der Zwischenschicht zur Scheibenkante zu verstehen. Das heißt insbesondere auch eine Zwischenschicht, die fertigungstechnisch derart gefertigt wird, dass sie einen Rückversatz zur Scheibenkante aufweist (ohne dabei notwendiger Weise geschnitten sein zu müssen). In einer vorteilhaften Ausgestaltung der erfindungsgemäßen Verbundscheibe beträgt die Breite r des Rückschnitts von 0,1 µm bis 2 mm und bevorzugt von 0,1 mm bis 1 mm. Dies ist besonders vorteilhaft, da dadurch eine gute Fixierung der Glasfaser an der Verbundscheibe bewirkt wird. Ist die Seitenkante der Außenscheibe nicht bündig zur Seitenkante der Innenscheibe angeordnet, so bezieht sich die Breite r des Rückschnitts auf die Seitenkante der Scheibe, die im Vergleich zur anderen Scheibe zurückversetzt ist.

In einer weiteren vorteilhaften Ausgestaltung der erfindungsgemäßen Verbundscheibe beträgt die Breite r des Rückschnitts von 10% des Durchmessers d der Glasfaser bis 400% des Durchmessers d und bevorzugt von 50% des Durchmessers d bis 200% des Durchmessers d, besonders bevorzugt von 70% des Durchmessers d bis 150% des Durchmessers d. Dies ist besonders vorteilhaft, da dadurch eine gute Fixierung der Glasfaser an der Verbundscheibe ermöglicht wird. Insbesondere im bevorzugten Bereich von r = 70% d bis 150% d ist die Glasfaser fast vollständig von Außenscheibe und Innenscheibe geschützt. Insbesondere beträgt die Breite r des Rückschnitts von 100% d bis 150% d, so dass die Glasfaser vollständig im Bereich des Rückschnitts angeordnet ist.

In einer weiteren vorteilhaften Ausgestaltung der erfindungsgemäßen Verbundscheibe ist die Glasfaser durch ein Klebemittel in den Bereich des Rückschnitts eingeklebt und auf diese Weise mit der innenseitigen Oberfläche II der Außenscheibe, der außenseitigen Oberfläche III der Innenscheibe und/oder der Seitenkante der Zwischenschicht fest verbunden. Dies hat den besonderen Vorteil, dass die Glasfaser fest mit der Verbundscheibe verbunden ist.

Besonders vorteilhafte Klebemittel sind Klebstoff, besonders bevorzugt Acrylatklebstoffe, Methylmethacrylatklebstoffe, Cyanacrylatklebstoffe, Polyepoxide, Silikonklebstoffe und/oder Silanvernetzende-Polymerklebstoffe, Gemische und/oder Copolymere davon.

In einer alternativen Ausgestaltung der erfindungsgemäßen Verbundscheibe ist die Glasfaser im Bereich des Rückschnitts durch Klemmen zwischen der Außenscheibe und der Innenscheibe befestigt. Dies hat den besonderen Vorteil, dass kein Klebemittel und keine besonderer Prozessschritt zur Fixierung der Glasfaser in der Verbundscheibe notwendig ist.

Die Außenscheibe und / oder die Innenscheibe enthalten bevorzugt Glas, insbesondere Kalk-Natron-Glas, oder Kunststoffe, vorzugsweise starre Kunststoffe, insbesondere Polycarbonat oder Polymethylmethacrylat. Die Dicke der Scheiben kann breit variieren und so hervorragend den Erfordernissen im Einzelfall angepasst werden. Vorzugsweise betragen die Dicken der Außenscheibe und der Innenscheibe von 0,5 mm bis 10 mm und bevorzugt von 1 mm bis 5 mm, ganz besonders bevorzugt von 1,4 mm bis 3 mm.

Die Außenscheibe, die Innenscheibe oder die Zwischenschicht können klar und farblos, aber auch getönt, getrübt oder gefärbt sein. Die Außenscheibe und die Innenscheibe können aus nicht vorgespanntem, teilvorgespanntem oder vorgespanntem Glas bestehen.

Die Zwischenschicht wird durch mindestens eine thermoplastische Verbindungsfolie gebildet. Die thermoplastische Verbindungsfolie enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon. Die Dicke der Zwischenschicht und insbesondere der thermoplastischen Verbindungsfolie beträgt bevorzugt von 0,2 mm bis 2 mm, besonders bevorzugt von 0,3 mm bis 1 mm, beispielsweise 0,38 mm oder 0,76 mm.

In einer weiteren vorteilhaften Ausgestaltung weist die erfindungsgemäße Verbundscheibe Heizmittel zur elektrischen Beheizung der Verbundscheibe auf. Bevorzugte Heizmittel sind dabei elektrisch leitfähige Drähte und/oder eine oder mehrere elektrisch beheizbare, transparente, elektrisch leitfähige Schicht.

Die erfindungsgemäße Seitenscheibe kann neben der durch die Heizmittel bewirkten Heizfunktion weitere Funktionalitäten aufweisen. In einer vorteilhaften Ausgestaltung weist die Verbundscheibe eine reflektierende Beschichtung für den Infrarotbereich auf. Eine solche Beschichtung kann auf eine Oberfläche der Außenscheibe oder auf eine Oberfläche der Innenscheibe aufgebracht sein, bevorzugt auf einer zur Zwischenschicht hingewandten Oberfläche, um die Beschichtung vor Korrosion und mechanischer Einwirkung zu schützen. Alternativ kann die Beschichtung in Form einer beschichteten thermoplastischen Folie, beispielsweise aus Polyethylenterephthalat (PET), in den Verbund eingebracht sein. In diesem Fall ist die beschichtete Folie bevorzugt zwischen einer ersten und einer zweiten thermoplastischen Verbindungsfolie angeordnet. IR-reflektierende Beschichtungen weisen typischerweise zumindest eine elektrisch leitfähige Schicht auf. Die Beschichtung kann zusätzlich dielektrische Schichten aufweisen, die beispielsweise zur Regulierung des Schichtwiderstands, zum Korrosionsschutz oder zur Verminderung der Reflexion dienen. Die leitfähige Schicht enthält bevorzugt Silber oder ein elektrisch leitfähiges Oxid (transparent conductive oxide, TCO) wie Indium-Zinn-Oxid (indium tin oxide, ITO). Die leitfähige Schicht weist bevorzugt eine Dicke von 10 nm bis 200 nm auf. Zur Verbesserung der Leitfähigkeit bei gleichzeitig hoher Transparenz kann die Beschichtung mehrere elektrisch leitfähige Schichten aufweisen, welche durch zumindest eine dielektrische Schicht voneinander getrennt sind. Die leitfähige Beschichtung kann beispielsweise zwei, drei oder vier elektrisch leitfähige Schichten enthalten. Typische dielektrische Schichten enthalten Oxide oder Nitride, beispielsweise Siliziumnitrid, Siliziumoxid, Aluminiumnitrid, Aluminiumoxid, Zinkoxid oder Titanoxid. Es versteht sich, dass diese elektrisch leitfähigen, transparenten Beschichtungen auch zur elektrischen Beheizung der Scheibe dienen können. Die Beschichtung weist bevorzugt eine kleinere Fläche als die Seitenscheibe auf, so dass ein umlaufender Randbereich mit einer Breite von bevorzugt 0,5 mm bis 10 mm nicht mit der Beschichtung versehen ist. Die leitfähige Beschichtung ist dadurch innerhalb der Zwischenschicht vor Kontakt mit der umgebenden Atmosphäre geschützt, was im Hinblick auf die Vermeidung von Korrosion vorteilhaft ist. Die Verbundscheibe kann auch weitere unbeschichtete Bereiche enthalten, beispielsweise Datentransmissionsfenster oder Kommunikationsfenster.

Ein weiterer Aspekt der Erfindung ist eine Verbundscheibenanordnung, mindestens umfassend:
- eine erfindungsgemäße Verbundscheibe und
- ein Leuchtmittel zur Einkopplung von Licht in die Glasfaser.

Das Leuchtmittel ist bevorzugt an einer Seitenkante der Verbundscheibe angeordnet. Im Falle einer beweglichen Verbundscheibe, wie einer zu öffnenden Seitenscheibe, ist das Leuchtmittel bevorzugt mit der Verbundscheibe verbunden und ebenfalls beweglich angeordnet. Es versteht sich, dass das Leuchtmittel auch unabhängig von der Verbundscheibe installiert sein kann und über eine bevorzugt nicht-lichtstreuende Glasfaser mit der erfindungsgemäßen lichtstreuenden Glasfaser verbunden sein kann.

Vorteilhafte Leuchtmittel sind beispielsweise Laserdioden, Leuchtdioden (LED) oder Glühbirnen, wobei die Erfindung jegliche Art von Lichtquelle, die für eine jeweilige Verwendung geeignet ist, umfasst. Die erfindungsgemäßen Leuchtmittel beinhalten auch Linsensysteme, Spiegelsysteme, Reflektorsysteme oder andere Lichtleiter, die zur Einkopplung des Lichts in die erfindungsgemäße Glasfaser dienen können.

Die Leuchtmittel können farbig oder weiß sein. Die Leuchtmittel können auch im ultravioletten Bereich Licht abgeben, sofern die Glasfaser oder ihre Umgebung das ultraviolette Licht in sichtbares Licht wandeln können. Bevorzugte Lichtfarben sind rot (wegen der ausgeprägten Signalwirkung), grün (wegen der hohen Empfindlichkeit des menschlichen Auges für das grüne Farbspektrum) und blau (wegen seiner besonders ästhetischen und wenig blendenden Wirkung).

Ein weiterer Aspekt der Erfindung ist ein Verfahren zur Herstellung einer erfindungsgemäßen Verbundscheibe, mindestens umfassen:
(a) Anordnen einer thermoplastischen Zwischenschicht zwischen einer Außenscheibe und einer Innenscheibe, wobei die Zwischenschicht zumindest einen Rückschnitt gegenüber den Seitenkanten der Scheiben aufweist,
(b) Verbinden der Außenscheibe mit der Innenscheibe über die Zwischenschicht durch Lamination,
(c) Einkleben einer lichtstreuenden Glasfaser in einen Bereich des Rückschnitts mit einem Klebemittel.

Es versteht sich, dass die Verfahrenschritte b) und c) auch vertauscht werden können.

Dieses Verfahren kann durch folgendes alternatives Verfahren zur Herstellung einer erfindungsgemäßen Verbundscheibe verbessert werden, welches mindestens umfasst:
(a) Anordnen einer thermoplastischen Zwischenschicht zwischen einer Außenscheibe und einer Innenscheibe,
(b) Verbinden der Außenscheibe mit der Innenscheibe über die Zwischenschicht durch Lamination,
(c) zumindest abschnittsweises Rückschneiden der thermoplastischen Zwischenschicht zwischen der Außenscheibe und der Innenscheibe durch ein Schneidewerkzeug,
(d) Einkleben einer lichtstreuenden Glasfaser in einen Bereich des Rückschnitts mit einem Klebemittel.

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe dabei erfolgt üblicherweise unter Einwirkung von Hitze, Vakuum und / oder Druck.

Ein erfindungsgemäß einsetzbares Schneidewerkzeug ist beispielsweise eine Klinge eines Messers, insbesondere eine V-förmige Klinge, die entlang der Seitenkante zwischen Außenscheibe und Innenscheibe geführt wird und die Zwischenschicht in einem schmalen Bereich in Form eines Rückschnitts entfernt.

Ein weiterer Aspekt der Erfindung umfasst die Verwendung der erfindungsgemäßen Verbundscheibe in Fortbewegungsmitteln für den Verkehr auf dem Lande, in der Luft oder zu Wasser, insbesondere in Zügen, Schiffen und Kraftfahrzeugen, beispielsweise als Windschutzscheibe, Heckscheibe, Seitenscheibe und/oder Dachscheibe, in Gebäuden, insbesondere im Zugangsbereich, Fensterbereich, Dachbereich oder Fassadenbereich, als Einbauteil in Möbeln und Geräten.

Die erfindungsgemäße Verbundscheibe ist besonders bevorzugt eine abschnittsweise rahmenlose Verglasung, wobei die erfindungsgemäß eingesetzte lichtstreuende Glasfaser an den rahmenlosen Seitenkanten angeordnet ist. Gleichwohl kann die lichtstreuende Glasfaser auch an einer inneren Seitenkante, beispielsweise im Bereich eines aus der Verglasung herausgeschnittenen Ausschnitts wie einer Glasluke in einer Dachscheibe angeordnet sein.

Die erfindungsgemäße Verbundscheibe ist bevorzugt als feststehende Verglasung ausgebildet, das heißt, die Verglasung ist relativ zu ihrer Umgebung feststehend angeordnet und beispielsweise durch einen abschnittsweise Befestigung fixiert, beispielsweise als Windschutzscheibe in einem Fahrzeug oder als Trennscheibe in einem Gebäude oder in einem Möbelstück.

Die erfindungsgemäße Verbundscheibe ist alternativ als bewegliche Verglasung ausgebildet, das heißt, die Verglasung ist relativ zu ihrer Umgebung beweglich angeordnet, beispielsweise als in einer Tür beweglich angeordnete Verglasung wie eine Seitenscheibe in einer Fahrzeugtür.

Ein weiterer Aspekt der Erfindung umfasst die Verwendung eines erfindungsgemäßen Leuchtmittels in einer Verbundscheibenanordnung zur Kennzeichnung einer elektrischen Funktion, bevorzugt einer Heizfunktion, einer Bewegung der erfindungsgemäßem Verbundscheibe, bevorzugt eines sich öffnenden oder schließenden Seitenfensters und/oder als Warnfunktion, bevorzugt bei einer rahmenlosen Seitenscheibe in einer geöffneten Fahrzeugtür.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1A: eine Draufsicht auf eine Ausgestaltung der erfindungsgemäßen Verbundscheibenanordnung,
- Figur 1B: eine Querschnittsdarstellung entlang der Schnittlinie A-A' durch die Verbundscheibe aus Figur 1A,
- Figur 2: eine Querschnittsdarstellung entlang der Schnittlinie A-A' durch eine alternative Ausgestaltung einer erfindungsgemäßen Verbundscheibe nach Figur 1A,
- Figur 3: ein Flussdiagramm einer Ausführungsform des erfindungsgemäßen Verfahrens.

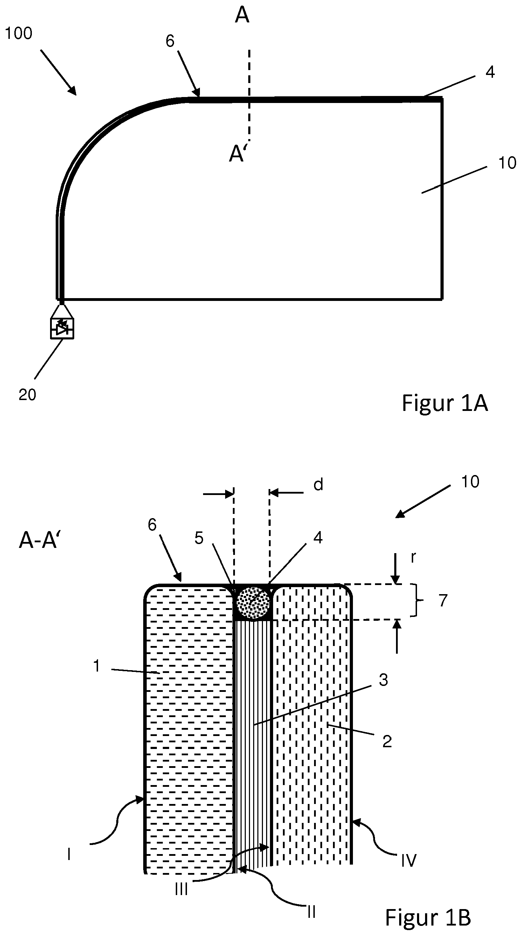

Figur 1A zeigt eine Draufsicht auf eine erfindungsgemäße Verbundscheibenanordnung 100, die eine erfindungsgemäße Verbundscheibe 10 und ein Leuchtmittel 20 umfasst. Figur 1B zeigt eine Querschnittsdarstellung entlang der Schnittlinie A-A' durch die Verbundscheibe 10 aus Figur 1A. Die Verbundscheibe 10 ist in diesem Beispiel als Seitenscheibe für ein Seitenfenster eines Personenkraftwagens ausgestaltet.

Die erfindungsgemäße Verbundscheibe 10 enthält eine Außenscheibe 1 mit einer innenseitigen Oberfläche II, eine Innenscheibe 2 mit einer außenseitigen Oberfläche III und eine thermoplastische Zwischenschicht 3, welche die innenseitige Oberfläche II der Außenscheibe 1 mit der außenseitigen Oberfläche III der Innenscheibe 2 über die Scheibenfläche miteinander verbindet. Die Außenscheibe 1 und die Innenscheibe 2 bestehen beispielsweise aus Kalk-Natron-Glas und weisen beispielsweise eine Dicke von jeweils 2,1 mm auf. Die thermoplastische Zwischenschicht 3 ist beispielsweise eine Folie aus Polyvinylbutyral (PVB) mit einer Dicke von 0,76 mm. Es versteht sich, dass auch andere Glasscheiben oder Polymerscheiben als Außenscheibe und Innenscheibe verwendet werden können. Des Weiteren kann die Dicke der Außenscheibe 1 und Innenscheibe 2 an die jeweilige Verwendung angepasst sein.

Die thermoplastische Zwischenschicht 3 ist im Bereich der Seitenkante 6 im Vergleich zur Außenscheibe 1 oder der Innenscheibe 2 rückgeschnitten. In den rückgeschnittenen Bereich 7 ist eine lichtstreuende Glasfaser 4 eingeklebt, beispielsweise mit einem Klebemittel 5 aus Cyanacrylatklebstoff. Die lichtstreuende Glasfaser 4 hat einen Durchmesser d von 200 µm. Die Breite r des Rückschnitts beträgt beispielsweise 250 µm. Die Breite r des Rückschnitts entspricht dabei etwa dem Durchmesser d der lichtstreuenden Glasfaser 4. An einem Ende der Glasfaser 4 ist eine Leuchtmittel 20 angeordnet. Das Leuchtmittel 20 besteht beispielsweise aus einer Laserdiode, die beispielsweise über einen Reflektor, Licht in die Glasfaser 4 einkoppeln kann. Bei Anlegen einer Spannung an die Laserdiode wird dann Licht in die Glasfaser 4 eingekoppelt. Die Glasfaser 4 streut dann das Licht an ihrer Oberfläche entlang ihrer gesamten Erstreckungslänge, so dass die Glasfaser 4 über ihre gesamte Erstreckungslänge leuchtet.

Durch die Anordnung der lichtstreuenden Glasfaser 4 im Rückschnitt 7 ist die Glasfaser 4 besonders gut vor mechanischen Belastungen geschützt. Des Weiteren ist die Glasfaser 4 im unbeleuchteten Zustand kaum sichtbar, was ästhetisch besonders vorteilhaft ist.

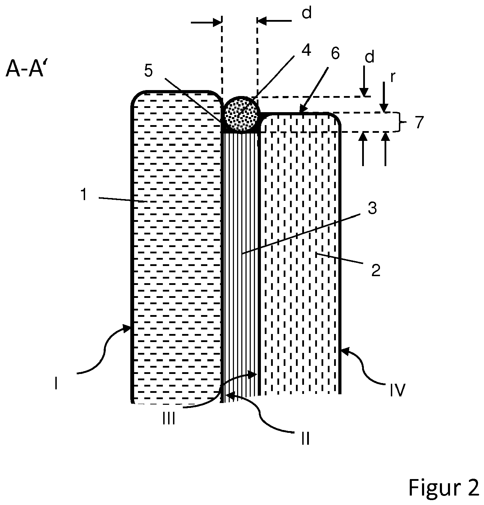

Figur 2 zeigt eine Querschnittsdarstellung entlang der Schnittlinie A-A' durch eine alternative Ausgestaltung einer erfindungsgemäßen Verbundscheibe 10 nach Figur 1A. Die Verbundscheibe 10 aus Figur 2 entspricht dabei im Wesentlichen in den Materialien und im Aufbau der Verbundscheibe 10 aus Figur 1B, so dass im Folgenden nur auf die Unterschiede zwischen beiden Verbundscheiben 10 eingegangen wird.

Die Verbundscheibe 10 ist beispielsweise eine Seitenscheibe einer Fahrzeugtür eines Personenkraftfahrzeugs. Die Einfassung der Seitenscheibe in der Fahrzeugtür ist beispielsweise rahmenlos, so dass die Seitenscheibe nur an ihrer unteren Seite geführt und in die Fahrzeugtür eingelassen ist. Das Leuchtmittel 20 ist hier beispielsweise eine leistungsstarke Leuchtdiode.

In Figur 2 überragt die Außenscheibe 1 die Innenscheibe 2 an der Seitenkante 6 um 1 mm. Die Breite r des Rückschnitts 7 beträgt etwa 100 µm bezogen auf die zurückversetzte Scheibe (hier die Innenscheibe 2). Die Breite r des Rückschnitts 7 beträgt somit etwa 50% des Durchmesser d der Glasfaser 4.

Die mit dieser Verbundscheibe 10 hergestellte Verbundscheibenanordnung 100 ist beispielsweise derart konfiguriert, dass das Leuchtmittel 20 beim Öffnen der Fahrzeugtür aktiviert wird und die Glasfaser 4 beleuchtet. Dies hat den besonderen Vorteil, dass die Fahrzeugtür im geöffneten Zustand beleuchtet ist und für andere Verkehrsteilnehmer besonders gut erkennbar ist. Die Sichtbarkeit der derart beleuchteten Verbundscheibe 10 ist bei Dunkelheit besonders erhöht - insbesondere da die Verbundscheibe 10 in diesem Beispiel rahmenlos ist und nur an ihrer unteren Seitenkante in der Fahrzeugtür befestigt ist. Die durch die Glasfaser 4 beleuchtete Seitenkante der Verbundscheibe 10 ist somit frei und ungehindert sichtbar.

Das Leuchtmittel 20 kann dabei einfarbig sein oder verschiedene Zustände durch verschiedene Farben kennzeichnen. So ist die Warnfunktion für ein rotes Leuchtmittel besonders hoch, da eine rote Farbe üblicherweise mit einer Gefahr assoziiert wird. Grüne Leuchtmittel sind bei Dunkelheit besonders gut zu erkennen, da das menschliche Auge eine besonders große Empfindlichkeit für das grüne Farbspektrum aufweist.

In einer weiteren beispielshaften Ausgestaltung weist das Leuchtmittel 20 beispielsweise eine rote Leuchtdiode und eine blaue Leuchtdiode auf. Die Verbundscheibenanordnung 100 ist dabei beispielsweise mit der Fahrzeugelektronik derart verbunden, dass bei einem Öffnen der Verbundscheibe 10 über elektrische Fensterheber, die Glasfaser 4 mit blauem Licht beleuchtet wird und beim Schließen der Verbundscheibe 10 die Glasfaser 4 mit rotem Licht beleuchtet wird. Dies hat den besonderen Vorteil, dass dadurch die Richtung der Bewegung der Verbundscheibe 10 relativ zum Türrahmen sichtbar wird und Personen die Gefahr eines Einklemmens von Körperteilen oder Gegenständen in dem sich schließenden Fenster schnell erkennen können. Es versteht sich, dass auch andere Farben oder weißes Licht für die Beleuchtung der Glasfaser 4 verwendet werden können. Des Weiteren können auch andere Funktionen über die Beleuchtung der Verbundscheibe 10 angezeigt werden oder besonders ästhetische Beleuchtungen realisiert werden.

Erfindungsgemäße Verbundscheiben 10 können optional eine zusätzliche elektrische Funktion und beispielsweise eine elektrische Heizfunktion aufweisen. Dabei können beispielsweise hier nicht dargestellte Heizmittel, wie Heizdrähte oder Heizschichten im Bereich zwischen Außenscheibe 1 und Innenscheibe 2 angeordnet sein. Derartige Heizdrähte bestehen beispielsweise aus Kupfer oder Wolfram und weisen eine Dicke von beispielsweise 30 µm auf. Als Heizschichten sind beispielsweise transparente, elektrisch leitfähige Beschichtungen bekannt, wie sie obenstehend beispielsweise beschrieben sind. Heizdrähte und Heizschichten können beispielsweise durch Stromsammelschienen, beispielsweise Streifen einer Kupferfolie mit einer Dicke von beispielsweise 100 µm und einer Breite von beispielsweise 7 mm, gebildet werden. Wird an die Stromsammelschienen eine Spannung angelegt, so fließt ein Strom durch die Heizdrähte oder die Heizschicht, wodurch die Heizwirkung entsteht. Die Spannung kann die übliche KFZ-Bordspannung von 14 V sein, oder auch eine Spannung von beispielsweise 42 V oder 48 V. Es versteht sich, dass die Spannung auch eine übliche Netzspannung von beispielsweise 110 V oder 220 V sein kann, insbesondere bei Verwendung einer erfindungsgemäßen Verbundscheibe 10 in der Gebäudetechnik, wie einem transparenten Heizkörper. Der entsprechende Beheizungsgrad der Verbundscheibe 10 kann wiederum über die Beleuchtung der Glasfaser 4 durch das Leuchtmittel 20 angezeigt werden.

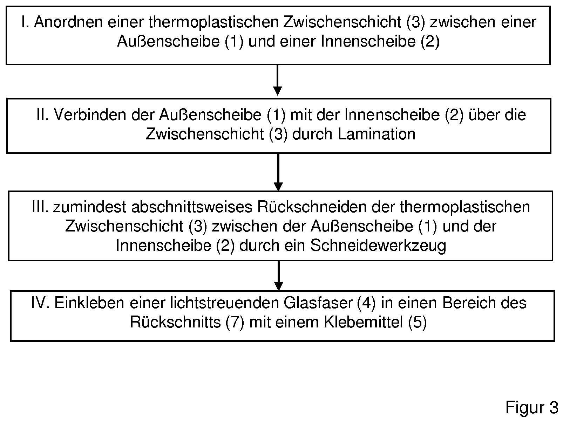

Figur 3 zeigt ein Flussdiagramm eines Ausführungsbeispiels des erfindungsgemäßen Verfahrens zur Herstellung einer erfindungsgemäßen Verbundscheibe 10. Das erfindungsgemäße Verfahren umfasst beispielsweise die folgenden Schritte:
I. Anordnen einer thermoplastischen Zwischenschicht (3) zwischen einer Außenscheibe (1) und einer Innenscheibe (2);
II. Verbinden der Außenscheibe (1) mit der Innenscheibe (2) über die Zwischenschicht (3) durch Lamination;
III. zumindest abschnittsweises Rückschneiden der thermoplastischen Zwischenschicht (3) zwischen der Außenscheibe (1) und der Innenscheibe (2) durch ein Schneidewerkzeug;
IV. Einkleben einer lichtstreuenden Glasfaser (4) in einen Bereich des Rückschnitts (7) mit einem Klebemittel (5).

### Bezugszeichenliste:

- 1: Außenscheibe
- 2: Innenscheibe
- 3: Zwischenschicht, thermoplastische Zwischenschicht
- 4: lichtstreuende Glasfaser
- 5: Klebemittel
- 6: Seitenkante
- 7: Rückschnitt
- 10: Verbundscheibe
- 20: Leuchtmittel
- 100: Verbundscheibenanordnung

- d: Durchmesser der lichtstreuenden Glasfaser 4
- r: Breite des Rückschnitts 7
- A-A': Schnittlinie

## Patentansprüche

1. Verbundscheibe (10), insbesondere laminierte Seitenscheibe für ein Seitenfenster eines Fahrzeugs, mindestens umfassend:
- eine Außenscheibe (1) und eine Innenscheibe (2), welche über eine Zwischenschicht (3) miteinander verbunden sind, wobei die Zwischenschicht (3) zumindest abschnittsweise einen Rückschnitt (7) zu einer Scheibenkante (6) aufweist und
- mindestens eine lichtstreuende Glasfaser (4), welche zumindest einen lichtstreuenden Glasfaserabschnitt aufweist, der so ausgebildet ist, dass durch Streuung Licht über eine Seitenwand der Glasfaser (4) über eine Erstreckungslänge des Glasfaserabschnitts ausgesendet werden kann, wobei die lichtstreuende Glasfaser (4) zumindest teilweise im Bereich des Rückschnitts (7) zwischen der Außenscheibe (1) und der Innenscheibe (2) angeordnet ist.

2. Verbundscheibe (10) nach Anspruch 1, wobei die Breite r des Rückschnitts (7) von 0,1 µm bis 2 mm beträgt, bevorzugt von 0,1 mm bis 1 mm.

3. Verbundscheibe (10) nach Anspruch 1 oder 2, wobei die Breite r des Rückschnitts (7) von 10% eines Durchmessers d der Glasfaser (4) bis 400% des Durchmessers d, bevorzugt von 50% des Durchmessers d bis 200% des Durchmessers d, und besonders bevorzugt von 70% des Durchmessers d bis 150 % des Durchmessers d, beträgt.

4. Verbundscheibe (10) nach einem der Ansprüche 1 bis 3, wobei die Glasfaser (4) durch ein Klebemittel (5) in einen Bereich des Rückschnitts (7) eingeklebt ist.

5. Verbundscheibe (10) nach Anspruch 4, wobei das Klebemittel (5) einen Klebstoff, bevorzugt einen Acrylatklebstoff, einen Methylmethacrylatklebstoff, einen Cyanacrylatklebstoff, ein Polyepoxid, einen Silikonklebstoff, und/oder einen Silanvernetzenden-Polymerklebstoff, Gemische und/oder Copolymere davon enthält.

6. Verbundscheibe (10) nach einem der Ansprüche 1 bis 3, wobei die Glasfaser (4) im Bereich des Rückschnitts (7) durch Klemmen befestigt ist.

7. Verbundscheibe (10) nach einem der Ansprüche 1 bis 6, wobei die Verbundscheibe (10) mindestens ein Heizmittel zur elektrischen Beheizung der Verbundscheibe (10) aufweist.

8. Verbundscheibe (10) nach Anspruch 7, wobei das Heizmittel mindestens einen elektrisch leitfähigen Draht und/oder mindestens eine elektrisch beheizbare, transparente, elektrisch leitfähige Schicht umfasst.

9. Verbundscheibenanordnung (100), umfassend:
- eine Verbundscheibe (10) nach einem der Ansprüche 1 bis 8 und
- ein Leuchtmittel (20) zur Einkopplung von Licht in die Glasfaser (4).

10. Verbundscheibenanordnung (100) nach Anspruch 9, wobei das Leuchtmittel (20) mindestens eine Laserdiode oder mindestens eine Leuchtdiode enthält.

11. Verfahren zur Herstellung einer Verbundscheibe (10) nach einem der Ansprüche 1 bis 8, mindestens umfassend:
(a) Anordnen einer thermoplastischen Zwischenschicht (3) zwischen einer Außenscheibe (1) und einer Innenscheibe (2),
(b) Verbinden der Außenscheibe (1) mit der Innenscheibe (2) über die Zwischenschicht (3) durch Lamination,
(c) zumindest abschnittsweises Rückschneiden der thermoplastischen Zwischenschicht (3) zwischen der Außenscheibe (1) und der Innenscheibe (2) durch ein Schneidewerkzeug,
(d) Einkleben mindestens einer lichtstreuenden Glasfaser (4) in einen Bereich des Rückschnitts (7) mit einem Klebemittel (5).

12. Verfahren nach Anspruch 11, wobei das Schneidwerkzeug eine Klinge eines Messers oder eine V-förmige Klinge ist.

13. Verwendung der Verbundscheibe (10) nach einem der Ansprüche 1 bis 8 oder der Verbundscheibenanordnung (100) nach Anspruch 9 oder 10 in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und/oder Dachscheibe, in Gebäuden, insbesondere im Zugangsbereich, Fensterbereich, Dachbereich oder Fassadenbereich, als Einbauteil in Möbeln und Geräten.

14. Verwendung eines Leuchtmittels (20) in einer Verbundscheibenanordnung (100) nach Anspruch 9 oder 10 zur Kennzeichnung einer elektrischen Funktion, bevorzugt einer Heizfunktion und/oder einer Bewegung der Verbundscheibe (10), bevorzugt eines sich öffnenden oder schließenden Seitenfensters.

15. Verwendung eines Leuchtmittels (20) in einer Verbundscheibenanordnung (100) nach Anspruch 9 oder 10 als Warnfunktion, bevorzugt bei einer zumindest teilweise rahmenlosen Seitenscheibe in einer geöffneten Fahrzeugtür.

## Claims

1. Composite pane (10), in particular laminated side pane for a side window of a vehicle, at least comprising:
- an outer pane (1) and an inner pane (2) that are bonded to one another via an intermediate layer (3), wherein the intermediate layer (3) has, at least in sections, a cutback (7) relative to a side edge (6) and
- at least one light-diffusing glass fiber (4), which has at least one light-diffusing glass fiber section that is implemented such that, by diffusion, light can be emitted via a side wall of the glass fiber (4) over an extension length of the glass fiber section, wherein the light-diffusing glass fiber (4) is arranged at least partially in the region of the cutback (7), between the outer pane (1) and the inner pane (2).

2. Composite pane (10) according to claim 1, wherein the width r of the cutback (7) is from 0.1 µm to 2 mm, preferably from 0.1 mm to 1 mm.

3. Composite pane (10) according to claim 1 or 2, wherein the width r of the cutback (7) is from 10% of a diameter d of the glass fiber (4) to 400% of the diameter d, preferably from 50% of the diameter d to 200% of the diameter d, and particularly preferably from 70% of the diameter d to 150 % of the diameter d.

4. Composite pane (10) according to one of claims 1 through 3, wherein the glass fiber (4) is glued into a region of the cutback (7) by an adhesive means (5).

5. Composite pane (10) according to claim 4, wherein the adhesive means (5) contains an adhesive, preferably an acrylate adhesive, a methyl methylacrylate adhesive, a cyanoacrylate adhesive, a polyepoxide, a silicone adhesive, and/or a silane cross-linking polymeric adhesive, mixtures, and/or copolymers thereof.

6. Composite pane (10) according to one of claims 1 through 3, wherein the glass fiber (4) is fastened in the region of the cutback (7) by clamping.

7. Composite pane (10) according to one of claims 1 through 6, wherein the composite pane (10) has at least one heating means for the electrical heating of the composite pane (10).

8. Composite pane (10) according to claim 7, wherein the heating means comprises at least one electrically conductive wire and/or at least one electrically heatable, transparent, electrically conductive layer.

9. Composite pane arrangement (10), comprising:
- a composite pane (10) according to one of claims 1 through 8 and
- a lighting means (20) for coupling light into the glass fiber (4).

10. Composite pane arrangement (10) according to claim 9, wherein the lighting means (20) contains at least one laser diode or at least one light-emitting diode.

11. Method for producing a composite pane (10) according to one of claims 1 through 8, at least comprising:
(a) Arranging a thermoplastic intermediate layer (3) between an outer pane (1) and an inner pane (2),
(b) Bonding the outer pane (1) to the inner pane (2) via the intermediate layer (3) by lamination,
(c) Cutting back the thermoplastic intermediate layer (3) at least in sections between the outer pane (1) and the inner pane (2) with a cutting tool,
(d) Gluing at least one light-diffusing glass fiber (4) into a region of the cutback (7) with an adhesive means (5).

12. Method according to claim 11, wherein the cutting tool is a blade of a knife or a V-shaped blade.

13. Use of the composite pane (10) according to one of claims 1 through 8 or of the composite pane arrangement (100) according to claim 9 or 10 in means of transportation for travel on land, in the air, or on water, in particular in trains, watercraft, and motor vehicles, for example, as a windshield, rear window, side window, and/or roof panel, in buildings, in particular in the access area, window area, roof area, or facade area, as a built-in component in furniture and appliances.

14. Use of a lighting means (20) in a composite pane arrangement (100) according to claim 9 or 10 for the identification of an electrical function, preferably a heating function and/or a movement of the composite pane (10), preferably an opening or closing side window.

15. Use of a lighting means (20) in a composite pane arrangement (100) according to claim 9 or 10 as a warning function, preferably in an at least partially frameless side pane in an opened vehicle door.

## Revendications

1. Vitre composite (10), en particulier vitre latérale feuilletée pour une fenêtre latérale d'un véhicule, comportant au moins :
- une vitre extérieure (1) et une vitre intérieure (2), lesquelles sont reliées l'une à l'autre par l'intermédiaire d'une couche intermédiaire (3), la couche intermédiaire (3) présentant, au moins par endroits, une restriction (7) par rapport à un bord de vitre (6) ; et
- au moins une fibre de verre (4) diffusant la lumière, laquelle présente au moins une section de fibre de verre diffusant la lumière qui est formée de telle sorte que, par diffusion, de la lumière peut être émise par l'intermédiaire d'une paroi latérale de la fibre de verre (4) sur une longueur d'extension de la section de fibre de verre, la fibre de verre (4) diffusant la lumière étant disposée au moins partiellement dans la région de la restriction (7) entre la vitre extérieure (1) et la vitre intérieure (2) .

2. Vitre composite (10) selon la revendication 1, dans laquelle la largeur r de la restriction (7) est de 0,1 µm à 2 µm, de préférence de 0,1 µm à 1 µm.

3. Vitre composite (10) selon l'une des revendications 1 ou 2, dans laquelle la largeur r de la restriction (7) est de 10 % d'un diamètre d de la fibre de verre (4) à 400 % du diamètre d, de préférence de 50 % du diamètre d à 200 % du diamètre d, et de façon particulièrement préférée de 70 % du diamètre d à 150 % du diamètre d.

4. Vitre composite (10) selon l'une des revendications 1 à 3, dans laquelle la fibre de verre (4) est collée dans une région de la restriction (7) par un moyen adhésif (5).

5. Vitre composite (10) selon la revendication 4, dans laquelle le moyen adhésif (5) contient une colle, de préférence une colle à base d'acrylate, une colle à base de méthacrylate de méthyle, une colle à base de cyanoacrylate, un polyépoxyde, une colle à base de silicone et/ou une colle à base de polymère réticulant par silane, les mélanges et/ou les copolymères de ceux-ci.

6. Vitre composite (10) selon l'une des revendications 1 à 3, dans laquelle la fibre de verre (4) est fixée dans la région de la restriction (7) par serrage.

7. Vitre composite (10) selon l'une des revendications 1 à 6, dans laquelle la vitre composite (10) présente au moins un moyen de chauffage pour le chauffage électrique de la vitre composite (10).

8. Vitre composite (10) selon la revendication 7, dans laquelle le moyen de chauffage comporte au moins un fil électriquement conducteur et/ou au moins une couche électriquement conductrice, transparente, apte à être chauffée électriquement.

9. Ensemble vitre composite (100), comportant :
- une vitre composite (10) selon l'une des revendications 1 à 8 ; et
- un moyen d'éclairage (20) pour le couplage en entrée de lumière dans la fibre de verre (4).

10. Ensemble vitre composite (100) selon la revendication 9, dans laquelle le moyen d'éclairage (20) contient au moins une diode laser ou au moins une diode électroluminescente.

11. Procédé de fabrication d'une vitre composite (10) selon l'une des revendications 1 à 8, comportant au moins :
(a) disposer une couche intermédiaire thermoplastique (3) entre une vitre extérieure (1) et une vitre intérieure (2) ;
(b) lier la vitre extérieure (1) avec la vitre intérieure (2) par l'intermédiaire de la couche intermédiaire (3) par stratification ;
(c) former une restriction par découpe au moins par endroits de la couche intermédiaire thermoplastique (3) entre la vitre extérieure (1) et la vitre intérieure (2) avec un outil de coupe ;
(d) coller au moins une fibre de verre (4) diffusant la lumière dans une région de la restriction (7) avec un moyen adhésif (5).

12. Procédé selon la revendication 11, dans laquelle l'outil de coupe est une lame d'un couteau ou une lame en forme de V.

13. Utilisation de la vitre composite (10) selon l'une des revendications 1 à 8 ou de l'ensemble vitre composite (100) selon l'une des revendications 9 ou 10 dans des moyens de locomotion pour le transport sur terre, dans les airs ou dans l'eau, en particulier dans les trains, les navires et les véhicules automobiles, par exemple en tant que pare-brise, vitre arrière, vitre latérale et/ou vitre de toit, dans des bâtiments, en particulier dans la région d'accès, la région de fenêtre, la région de toit ou la région de façade, en tant que pièce rapportée dans des meubles et des appareils.

14. Utilisation d'un moyen d'éclairage (20) dans un ensemble vitre composite (100) selon l'une des revendications 9 ou 10 pour l'identification d'une fonction électrique, de préférence d'une fonction de chauffage et/ou d'un déplacement de la vitre composite (10), de préférence d'une fenêtre latérale s'ouvrant ou se fermant.

15. Utilisation d'un moyen d'éclairage (20) dans un ensemble vitre composite (100) selon l'une des revendications 9 ou 10 en tant que fonction d'alerte, de préférence dans le cas d'une vitre latérale au moins partiellement sans cadre dans une portière de véhicule ouverte.
